# EUROPÄISCHE PATENTSCHRIFT

(11) **EP 1 468 865 B1**
(45) Veröffentlichungstag und Bekanntmachung des Hinweises auf die Patenterteilung: **14.09.2016**
(21) Anmeldenummer: 04090109.2
(22) Anmeldetag: 16.03.2004
(51) Int. Cl.: B60L 11/18, H02J 7/14

(54) **Vorrichtung und Verfahren für ein Energiemanagement in einem Kraftfahrzeug**
Device and method for energy management in a motor vehicle
Dispositif et procédé de gestion d'énergie d'un véhicule à moteur

(30) Priorität: 17.04.2003 DE 10318882
(43) Veröffentlichungstag der Anmeldung: 20.10.2004
(73) Patentinhaber: Volkswagen Aktiengesellschaft, 38440 Wolfsburg (DE)
(72) Erfinder: Hofmann, Lars Dr.-Ing, 38448 Wolfsburg (DE); Adamis, Panagiotis Prof. Dr.-Ing., 38442 Wolfsburg (DE); Petersen, Rainer Dipl. Ing., 38444 Wolfsburg (DE)
(74) Vertreter: Patentanwälte Bressel und Partner mbB

(56) Entgegenhaltungen:
- WO-A1-02/066293
- DE-A1- 19 929 594
- US-A- 5 873 426
- US-B1- 6 275 004

## Beschreibung

Die Erfindung bezieht sich auf eine Vorrichtung und ein Verfahren für ein Energiemanagement in einem Kraftfahrzeug, umfassend einen Verbrennungsmotor und mindestens eine Elektromaschine, wobei die Elektromaschine mindestens generatorisch betreibbar ist.

Wesentliche Energieströme in einem Kraftfahrzeug sind ein Energiestrom zwischen einem Tank und dem Verbrennungsmotor sowie Energieströme zwischen der Elektromaschine und einer Fahrzeugbatterie und der Elektromaschine und elektrischen Verbrauchern. Die Energieströme sind für einen optimalen Kraftfahrzeugbetrieb geeignet zu koordinieren.

Der Anteil am Energiestrom zwischen Tank und Verbrennungsmotor, welcher zum Antrieb eines Fahrzeuggetriebes notwendig ist, ist beispielsweise über eine geeignete Getriebeschaltstrategie optimierbar, wobei ein Radleistungswunsch eines Fahrers bei einer möglichst geringen Motordrehzahl realisiert wird.

Energieströme zu den Verbrauchern werden im Regelfall durch einen Fahrerwunsch geprägt. Ein Eingriff in diese Energieströme ist nur in Ausnahmefällen, beispielsweise eine Sitzbelegungserkennung für Sitzheizungen oder eine Zeitschaltung für Scheibenheizungen, oder in energetischen Ausnahmezuständen sinnvoll. Hierzu ist es beispielsweise bekannt, einzelne Verbraucher gezielt zudrosseln oder kurzzeitig abzuschalten, um Systeme mit hoher Priorität sicher zu versorgen.

Um Kraftstoff zu sparen ist es aus der DE 32 03 240 A1 bekannt, eine als Lichtmaschine ausgebildete Elektromaschine nur zu erregen, wenn entweder die Spannung einer der Lichtmaschine zugeordneten Batterie unter einen vorgegebenen Werft abgesunken ist oder wenn die Geschwindigkeit eines Fahrzeugs gemäß Fahrerwunsch verringert wird. Dabei wird die zu verringernde Energie des Fahrzeugs zur Stromerzeugung verwendet.

Aus der US 5 873 426 A ist eine gattungsgemäße Vorrichtung für ein Energiemanagement in einem Kraftfahrzeug bekannt, umfassend einen Verbrennungsmotor und mindestens eine Elektromaschine, wobei die Elektromaschine wahlweise generatorisch oder motorisch betreibbar ist und ein Generatorbetrieb der Elektromaschine durch den Verbrennungsmotor bei Unterschreiten eines Ladezustand-Schwellwertes freigebbar ist. Dabei ist eine Leistungsabgabe der Elektromaschine mindestens in Abhängigkeit des Ladezustandes der Batterie begrenzbar, wobei im motorischen Betrieb mindestens eine Anlasserfunktion zum Starten des Verbrennungsmotors freigegeben ist und in einer Funktion "elektrisch Fahren" der Verbrennungsmotor abschaltbar und das Kraftfahrzeug durch die Elektromaschine antreibbar ist. Dabei ist die Funktion "elektrisch Fahren" mindestens in Abhängigkeit des Ladezustandes der Batterie freiggebbar.

Der Erfindung liegt das technische Problem zugrunde, eine Vorrichtung und ein Verfahren für ein Energiemanagement in einem Kraftfahrzeug zu schaffen, durch welche der Energiestrom zwischen Tank und Verbrennungsmotor weiter reduziert wird.

Die Lösung des Problems ergibt sich durch die Gegenstände mit den Merkmalen der Patentansprüche 1 und 11. Weitere vorteilhafte Ausgestaltungen der Erfindung ergeben sich aus den Unteransprüchen.

Hierfür wird ein Generatorbetrieb einer Elektromaschine durch einen Verbrennungsmotor bei Unterschreiten eines Ladezustand-Schwellwertes einer Batterie mit einer variablen Leistungsabgabe freigegeben, wobei die Leistungsabgabe mindestens in Abhängigkeit des Ladezustands der Batterie begrenzbar ist. Dabei ist eine stufenweise oder kontinuierliche Abhängigkeit der Leistungsabgabe vom Ladezustand denkbar ist. Oberhalb des Ladezustand-Schwellwertes ist keine Erzeugung elektrischer Energie durch den Verbrennungsmotor zulässig. Bei Unterschreiten des Ladezustand-Schwellwertes sind zunächst nur kleine Leistungen der Elektromaschine im Sinne eines guten Ladewirkungsgrades bei geringen ohmschen Verlusten zulässig. Erst bei weiterem Absinken des Ladezustandes wird der Generatorbetrieb durch den Verbrennungsmotor innerhalb stabil zu beherrschenden Leistungsgrenzen freigegeben. Der Ladewirkungsgrad gibt an, wieviel mechanische und/oder elektrische Energie einem E-System entnehmbar ist bezogen auf die zuvor zugeführte Energie. Das E-System umfasst mindestens die Batterie. Vorzugsweise werden jedoch auch die Elektromaschine und/oder ein Bordnetz berücksichtigt. Im Generatorbetrieb der Elektromaschine wirkt ein Bremsmoment auf die Kurbelwelle. Für eine Kompensation ist der Generatorbetrieb vorzugsweise in einer Motorsteuerung berücksichtigt, so dass eine Radleistung davon unbeeinflusst ist. Denkbar ist beispielsweise eine Lastpunktverschiebung, d.h. ein Aufbringen eines Zusatzmomentes, durch welches das Bremsmoment aktiv kompensiert wird. Durch eine begrenzte Freigabe der Generatorleistung der Elektromaschine bei einem Generatorbetrieb durch den Verbrennungsmotor wird ein Energiestrom zwischen Elektromaschine und Batterie optimiert, so dass ein Energiestrom zwischen Tank und Verbrennungsmotor minimiert wird.

Dabei ist die Elektromaschine wahlweise generatorisch oder motorisch betreibbar, wobei im motorischen Betrieb mindestens ein Anlasserbetrieb zum Starten des Verbrennungsmotors freigegeben ist. Im Rahmen einer anliegenden zulässigen Entladeleistung der Batterie und/oder einer Motorleistung der Elektromaschine ist der Anlasserbetrieb unabhängig vom Ladezustand der Batterie freigegeben.

Weiter ist in einer Funktion "elektrisch Fahren" der Verbrennungsmotor abschaltbar und das Kraftfahrzeug durch die Elektromaschine antreibbar, wobei die Funktion "elektrisch Fahren" mindestens in Abhängigkeit des Ladezustands der Batterie mit einer variablen Leistungsbegrenzung freigebbar ist. Die Funktion "elektrisch Fahren" ist vorzugsweise dann zu wählen, wenn ein spezifische Verbrauch des Verbrennungsmotors höher liegt als ein spezifischer Verbrauch der Elektromaschine, wobei der spezifische Verbrauch der Elektromaschine das Verhältnis zwischen einer motorischen Leistungsabgabe der Elektromaschine und der im Generatorbetrieb durch den Verbrennungsmotor zugeführten Energie wiedergibt. Steigt beispielsweise als Folge von Rekuperation der Ladezustand der Batterie, so ist es denkbar, das Kraftfahrzeug auch bei einem schlechteren spezifischen Verbrauch der Elektromaschine elektrisch zu betreiben. Die Freigabe ist jedoch durch die Leistungsgrenze der Elektromaschine begrenzt. Es ist daher zu überprüfen, ob die von einem Fahrer geforderte Radleistung durch die Elektromaschine aufbringbar ist. Dabei ist zu berücksichtigen, dass bei einer maximalen Leistungsabgabe der Elektromaschine für den Fahrbetrieb keine Energie durch den verbrennungsmotorischen Generatorbetrieb erzeugt wird. Weiter ist es denkbar, dass die Funktion "elektrisch Fahren" auch durch einen Fahrer beispielsweise für eine Emissionsreduzierung im Stadtverkehr wählbar ist.

Zusätzlich ist die Elektromaschine in einer Funktion "dauerhaft Boosten" betreibbar, wobei die Funktion "dauerhaft Boosten" mindestens in Abhängigkeit des Ladezustandes der Batterie freigebbar und diese Leistungsabgabe der Funktion "dauerhaft Boosten" mindestens in Abhängigkeit des Ladezustandes begrenzbar. Dadurch wird verhindert, dass die Batterie aufgrund des motorischen Betriebes der Elektromaschine soweit entladen wird, dass kein Starten des Motors mehr möglich ist. Steigt der Ladezustand der Batterie beispielsweise aufgrund ungewöhnlich großer rekuperierter Energiemengen über einen Schwellwert, so wird die Elektromaschine in der Funktion "dauerhaft Boosten" zusätzlich zu einem Antrieb durch den Verbrennungsmotor betrieben. Dabei ist es denkbar, die Leistung des Verbrennungsmotors unverändert aufrecht zu halten, um so eine temporäre Steigerung der Fahrleistung zu reduzieren. Ein derartiger Antrieb setzt voraus, dass das Fahrzeuggetriebe für eine derartige Leistungssteigerung ausreichend dimensioniert ist. Vorzugsweise wird bei einem "dauerhaften Boosten" die Leistung des Verbrennungsmotors reduziert, sodass der Kraftstoffverbrauch gesenkt wird. Daneben ist es auch denkbar, beispielsweise durch eine Voreinstellung wie einen Sportlichkeitsfaktor des Fahrers, wahlweise für die Funktion "dauerhaft Boosten" eine Fahrleistungssteigerung oder eine Kraftstoffreduzierung zur Verfügung zu stellen.

Die Leistungsabgabe der Funktion "dauerhaft Boosten" ist mindestens in Abhängigkeit des Ladezustandes begrenzbar, wobei mindestens ein Grenzwert für ein Zu- oder Absteuern mindestens der Funktion "dauerhaft Boosten" der Elektromaschine dynamisch festlegbar ist, wobei für eine Festlegung mindestens eine Umweltinformation berücksichtigt wird. Dabei werden Grenzwerte in Richtung höherer oder niedrigerer Ladezustände verschoben. Zusätzlich ist es auch denkbar, dass einzelne Bereiche gestaucht oder gestreckt werden. Die mindestens eine Umweltinformation ist eine Topografieinformation. Durch eine Topografieerkennung ist beispielsweise eine bevorstehende, lang andauernde Rekuperationsphase signalisierbar. Als Reaktion auf diese Signalisierung ist es möglich, Grenzwerte in Richtung kleinerer Ladezustände zu verschieben. Dadurch wird vor der Rekuperationsphase ein Verbrauch der gespeicherten Energie gefördert, sodass genügend Kapazität zur Aufnahme der Rekuperationsenergie zur Verfügung steht. Eine weitere Umweltinformation kann beispielsweise eine Fahrertyperkennung sein.

In einer Ausführungsform ist die Elektromaschine zusätzlich durch das Fahrzeuggetriebe als Generator betreibbar, wobei ein Betrieb der Elektromaschine durch das Fahrzeuggetriebe über den gesamten Ladezustandsbereich der Batterie freigegeben ist. Ein derartiger Rekuperations-Betrieb der Elektromaschine dient zur Rückgewinnung von Bremsenergie und/oder kinetischer Energie und/oder zur Synchronisation von Hochschaltvorgängen. Eine Leistungsbegrenzung erfolgt im Rahmen einer maximalen Leistungsaufnahme von Batterie und/oder Bordnetz. Eine derartige Leistungsbegrenzung ist jedoch vorzugsweise nicht Aufgabe des Energiemanagements. Die Elektromaschine ist vorzugsweise zwischen dem Verbrennungsmotor und einem Fahrzeuggetriebe angeordnet.

In einer weiteren bevorzugten Ausführungsform ist die Elektromaschine in Funktionen "kurzzeitig Boosten" und/oder "Synchronisation Rückschaltvorgänge" betreibbar, wobei die Funktionen mindestens in Abhängigkeit des Ladezustands der Batterie freigebbar sind und eine maximale Leistungsabgabe mindestens in Abhängigkeit des Ladezustands begrenzbar ist. Die Funktion "kurzzeitiges Boosten" dient zum Ausgleich dynamischer Drehmomentdefizite des Verbrennungsmotors. Für eine "Synchronisation Rückschaltvorgänge" wird eine Getriebeeingangswelle durch die Elektromaschine angetrieben und dadurch mit einer Getriebeausgangswelle synchronisiert. Beide Funktionen sind Komfortfunktionen. Je geringer der Ladezustand der Batterie ist, desto geringer ist die durch die Funktionen maximal erlaubte Leistungsabgabe. Werden festgelegte Grenzwerte des Ladezustands der Batterie unterschritten, so werden die Funktionen nicht länger freigegeben. Dadurch wird verhindert, dass die Batterie aufgrund des motorischen Betriebs der Elektromaschine soweit entladen wird, dass kein Starten des Motors mehr möglich ist. Die Grenzwerte des Ladezustands für die einzelnen Funktionen können voneinander abweichen.

In einer weiteren Ausführungsform ist ein Wechsel zwischen einem elektrischen und einem verbrennungsmotorischen Betrieb des Fahrzeugs durch Hysteresen begrenzt. Ein Wechsel zwischen verbrennungsmotorischem und elektrischem Fahren ist im Regelfall für den Fahrer spürbar. Um dieser Komforteinbuße entgegenzuwirken wird daher die Häufigkeit der Wechsel begrenzt.

In einer weiteren Ausführungsform wird mindestens ein Grenzwert für ein Zu- oder Absteuern mindestens einer weiteren Funktion der Elektromaschine und/oder des Verbrennungsmotors dynamisch festgelegt, wobei für die Festlegung mindestens eine Umweltinformation berücksichtigt wird. Für das Zu- oder Absteuern einzelner Funktionen werden funktionsindividuell Bereiche in Abhängigkeit des Ladezustands der Batterie und der Leistungsfähigkeit des E-Systems festgelegt. Aufgrund von Umweltinformationen werden die Bereiche verändert. Dabei werden beispielsweise Grenzwerte in Richtung höherer oder niedriger Ladezustände verschoben. Daneben ist es auch denkbar, dass einzelne Bereiche gestaucht oder gestreckt werden. Die Verschiebung der Grenzwerte erfolgt vorzugsweise stufenlos. Umweltinformationen sind beispielsweise eine Fahrertyperkennung, Topografieinformationen etc. Durch eine Topografieerkennung ist beispielsweise eine bevorstehende, lang andauernde Rekuperationsphase signalisierbar. Als Reaktion auf diese Signalisierung ist es denkbar, Grenzwerte in Richtung kleinere Ladezustände zu verschieben. Dadurch wird vor der Rekuperationsphase ein Verbrauch der gespeicherten Energie gefördert, so dass genügend Kapazität zur Aufnahme der Rekuperationsenergie zur Verfügung steht.

In einer weiteren Ausführungsform wird eine maximale Leistungsfähigkeit eines E-Systems, umfassend die Elektromaschine, mindestens eine Batterie und mindestens ein Bordnetz, ermittelt, wobei die Leistungsfähigkeit mindestens aus der maximal zulässigen Lade- und Entladeleistung der Batterie ermittelt wird. Die Leistungsfähigkeit wird bei einer Ansteuerung der Elektromaschine berücksichtigt. Dadurch wird verhindert, dass nicht erfüllbare Forderungen an die Elektromaschine gestellt werden. Daneben ist es denkbar, die ermittelte Leistungsfähigkeit anderen Modulen einer Fahrzeugsteuerung zur Verfügung zu stellen.

In einer weiteren Ausführungsform ist ein maximales Motor- und/oder Generatormoment in Abhängigkeit einer Leistungsfähigkeit des E-Systems, einer aktuellen Drehzahl der Elektromaschine und Verlusten ermittelbar. Je nach Betriebsmodus ist durch die Elektromaschine eine Sollleistung oder ein Sollmoment aufzubringen. Die Sollwertvorgabe ist dabei durch die dynamisch ermittelten Grenzwerte der Leistungsfähigkeit und/oder Momente begrenzt.

In einer weiteren bevorzugten Ausführungsform wird für die Leistungsfähigkeit des E-Systems mindestens eine Bordnetzleistung berücksichtigt, wobei die Bordnetzleistung aus einer Leistungsaufnahme mindestens eines elektrischen Verbrauchers ermittelt wird. Vorzugsweise werden Leistungsaufnahmen aller elektrischen Verbraucher erfasst, es ist jedoch denkbar, einzelne Verbraucher mit untergeordneter Leistungsaufnahme zu vernachlässigen und/oder die Leistungsaufnahme einzelner repräsentativer Verbraucher zu ermitteln. Durch die Korrektur der Leistungsfähigkeit um die Leistungsaufnahme der Verbraucher wird die Wahl der Betriebsart der Elektromaschine stabilisiert. Insbesondere bei kleinen Leistungen der Batterie sind anderenfalls Komfort- und/oder Funktionseinbußen möglich. Es ist auch denkbar, die Leistungsaufnahme ohne zusätzliche Modelle und/oder Sensorik durch einen Differenzbildung zwischen Batteriestrom und DC-Strom der Elektromaschine zu ermitteln.

In einer weiteren bevorzugten Ausführungsform wird für die Leistungsfähigkeit des E-Systems mindestens eine maximal zulässige Leistungsaufnahme und -abgabe der Elektromaschine berücksichtigt. Dadurch lassen sich aktuell zulässige maximale und minimale DC-Leistungen des E-Systems, umfassend Batterie, Bordnetz und Elektromaschine, berechnen. Die Berücksichtigung der DC-Leistung bei der Wahl der Betriebsart der Elektromaschine beispielsweise in einem Antriebsteuerungsmodul erfolgt anhand der DC-Leistung ohne spezifische Kenntnisse über die einzelnen Komponenten. Sie ist daher einem komponentenspezifischen Algorithmus vorzuziehen, da bei einem komponentenspezifischen Algorithmus jeder Austausch einer Komponente eine Änderung im Antriebsteuerungsmodul verlangt.

Daneben ist es auch denkbar, die Leistungsfähigkeit des E-Systems anhand anderer geeigneter Größen zu ermitteln, beispielsweise anhand von elektrischen Strömen und/oder Spannungen sowie aufgrund einer mechanischen Leistung der Elektromaschine.

Die Erfindung wird nachfolgend anhand eines bevorzugten Ausführungsbeispiels näher erläutert. Die Figuren zeigen:
- Fig. 1: eine schematische Darstellung wesentlicher Energieströme in einem Kraftfahrzeug,
- Fig. 2: eine schematische Darstellung eines Kennfeldes für eine Funktionssteuerung einer Elektromaschine,
- Fig. 3: eine schematische Darstellung einer Kennfeldanpassung und

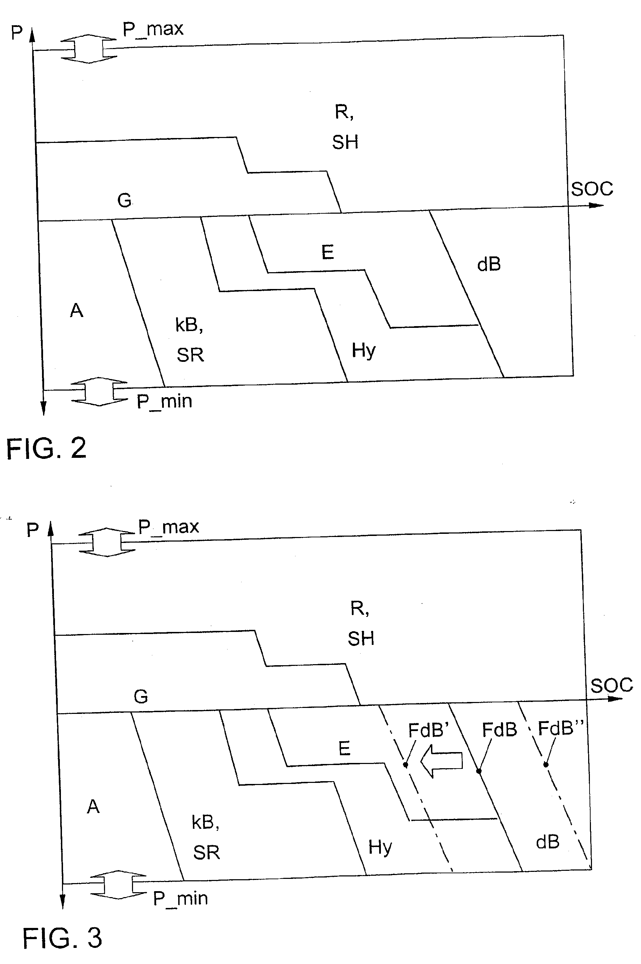

- Fig. 2: ein Ablaufdiagramm zur Ermittlung einer elektrischen Leistungsfähigkeit und/oder eines maximalen Moments.

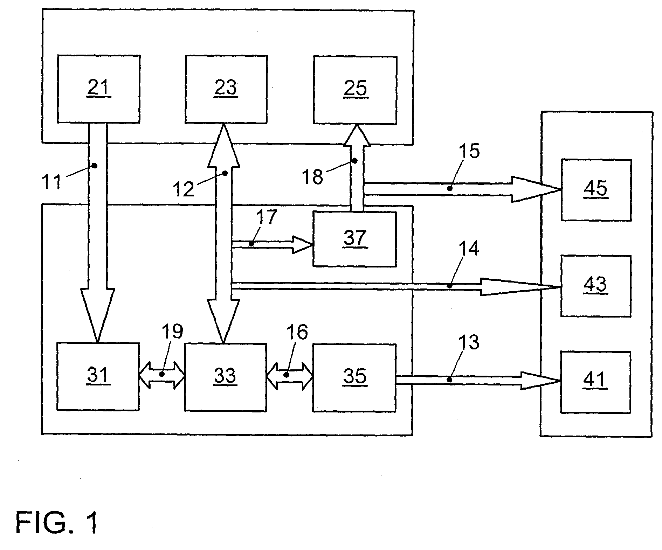

Fig. 1 zeigt schematisch die wesentlichen Energieströme 11-19 in einem nicht dargestellten Kraftfahrzeug zwischen Speichern 21, 23, 25, Wandlern 31, 33, 35, 37 und Verbrauchern 41, 43, 45, wobei thermische Energieströme nicht berücksichtigt sind. Die (Energie-)Speicher des Systems sind ein Tank 21 sowie Batterien 23, 25. Die Batterie 25 ist dabei als 12V Batterie ausgebildet. Um den Bedürfnissen der moderner Kraftfahrzeuge mit einer Vielzahl an elektrischen und/oder mechanischen Verbrauchern ohne Komforteinbußen gerecht zu werden ist, umfasst das Kraftfahrzeug eine zweite Batterie 23, beispielsweise eine 42V Batterie. Durch die Wandler 31, 33, 35, 37 wird eine aus den Speicher 21, 23, 25 zugeführte Energie für die Verbraucher 41, 43, 45 geeignet umgewandelt. Dabei umfasst das System einen Verbrennungsmotor 31, eine Elektromaschine 33, ein Fahrzeuggetriebe 35 und einen Spannungswandler 37. Verbraucher sind ein Kraftfahrzeug-Antrieb 41, elektrische Verbraucher 43 und elektrische Verbraucher im 12V-Bordnetz 45.

Durch ein erfindungsgemäßes Energiemanagement wird der Energiestrom 12 zwischen der Elektromaschine 33 und der Batterie 23 derart optimiert, dass der Energiestrom 11 zwischen Tank 21 und Verbrennungsmotor 31 minimiert wird. Die Energieströme 13-15 zu den Verbrauchern 41, 43, 45 werden im Wesentlichen durch einen Fahrerwunsch gesteuert. Ein Eingriff beispielsweise durch Abschaltung und/oder Reduzierung der Antriebsleistung ist nur in Ausnahmesituationen sinnvoll und/oder wünschenswert. Der Energiestrom 16 zwischen der Elektromaschine 33 und dem Fahrzeuggetriebe 35 ist vorzugsweise mittels einer geeigneten Getriebeschaltstrategie derart gesteuert, dass einem Radleistungswunsch des Fahrers bei einer möglichst geringen Drehzahl des Verbrennungsmotors 31 erzielt wird.

Die Elektromaschine 33 ist generatorisch und/oder motorisch betreibbar. Im Generatorbetrieb fließt der Energiestrom 12 von der Elektromaschine 33 zu der Batterie 23, so dass diese geladen wird. Der Antrieb der Elektromaschine 33 erfolgt dabei durch den Verbrennungsmotor 31, d.h. unter Verbrauch von Kraftstoff, und/oder durch das Fahrzeuggetriebe 35, d.h. unter Ausnutzung von Bremsenergie und/oder kinetischer Energie. Im Motorbetrieb fließt der Energiestrom 12 von der Batterie 23 zu der Elektromaschine 33, so dass die Batterie 23 entladen wird. Der Motorbetrieb dient beispielsweise zum Anlassen des Verbrennungsmotors 31, zum Boosten, zur Synchronisation von Rückschaltvorgängen sowie zu einem elektrischen Antrieb des Kraftfahrzeugs. Durch das Energiemanagement werden eine Betriebsart und eine zulässige Leistung der Elektromaschine 33 in Abhängigkeit von einem Ladezustand der Batterie 23 gezielt gesperrt oder freigegeben, so dass der Kraftstoffverbrauch reduziert wird. Die Batterie 25, der Spannungswandler 37 und die Verbraucher 45 werden vorzugsweise für die Ermittlung einer minimalen und einer maximalen Leistungsfähigkeit eines E-Systems berücksichtigt. Es ist jedoch auch eine Vernachlässigung dieser Spannungsebene denkbar.

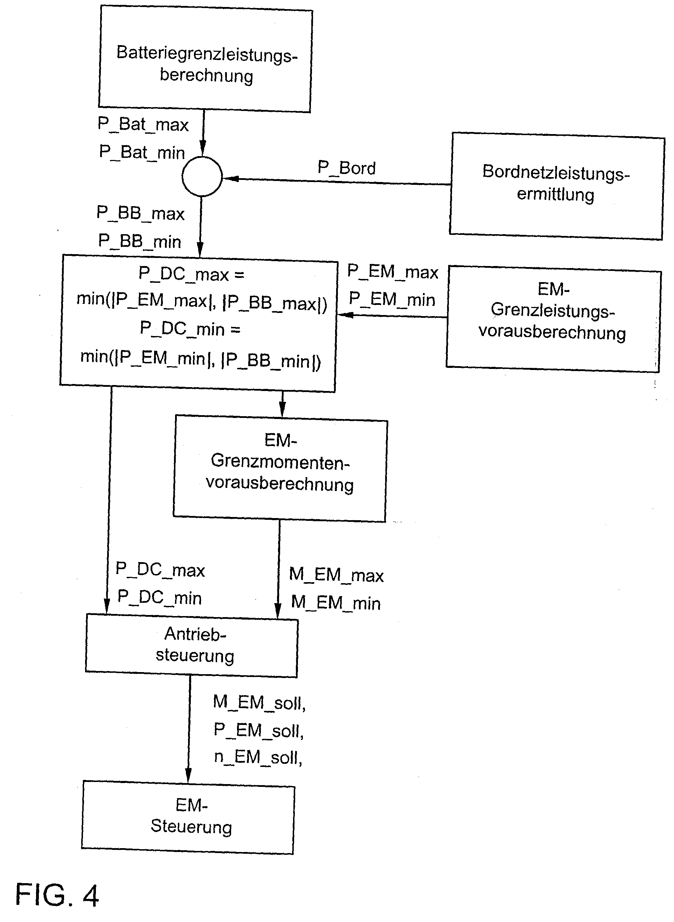

Fig. 2 zeigt schematisch ein Kennfeld für eine Funktionssteuerung der in Fig. 1 dargestellten Elektromaschine 33. Auf der horizontalen Achse ist dabei der Batterieladezustand SOC (State Of Charge) aufgetragen und auf der vertikalen Achse eine Leistungskenngröße P des Systems. Dabei kann es sich um eine beliebige Größe, welche eine mechanische und/oder elektrische Leistungsfähigkeit eines E-Systems widerspiegelt handeln. Das E-System umfasst vorzugsweise die in Fig. 1 dargestellten Elemente Elektromaschine 33, Batterien 23, 25 und Verbraucher 43, 45. Eine geeignete Kenngröße ist beispielsweise eine durch die Elektromaschine 33 abzugebende DC-Leistung und/oder ein abzugebenden Moment. Es ist auch denkbar, für einzelne Funktionen der Elektromaschine unterschiedliche Ordinaten zu wählen. Die Grenzen der Leistungsfähigkeit P_max, P_min sind nicht statisch sondern verändern sich mit dem Zustand des E-Systems. Sie werden beispielsweise durch das in Fig. 4 dargestellte Vorgehen ermittelt.

Fig. 4 zeigt ein Ablaufdiagramm für eine Ermittlung der aktuellen minimalen und maximalen Leistungsfähigkeit des E-Systems. Hierfür wird zunächst in einem Modul "Batteriegrenzleistungsberechnung" eine aktuell maximal zulässige Lade- und Entladeleistung P_Bat_max, P_Bat_min der in Fig. 1 dargestellten Batterie 23 ermittelt. In einem Modul "Bordnetzleistungsermittlung" wird eine Leistungsaufnahme P_Bord aller elektrischen Verbraucher auf allen Spannungsebenen des Kraftfahrzeugs ermittelt. Die Leistungsaufnahme P_Bord der Verbraucher ist dabei direkt und/oder über Differenzbildung messbar und/oder durch geeignete Algorithmen berechenbar. Die maximale Batterielade- und Batterieentladeleistung P_Bat_max, P_Bat_min wird um den Betrag der Bordnetzleistung P_Bord korrigiert. Durch diese Korrektur ist eine verbesserte Aussage über die Leistungsfähigkeit des E-Systems möglich. Die ermittelte maximale Leistungsaufnahme und -abgabe des Systems P_BB_max, P_BB_min wird mit einer maximal zulässigen Leistungsaufnahme und -abgabe der Elektromaschine verglichen P_EM_max, P_EM_min. Eine maximale DC-Leistung P_DC_max des E-Systems ist das betragsmäßige Minimum von einer maximalen Leistungsabgabe der Elektromaschine P_EM_max und einer maximalen Leistungsaufnahme P_BB_max. Eine minimale DC-Leistung P_DC_min des E-Systems ist das betragsmäßige Minimum von einer maximalen Leistungsaufnahme der Elektromaschine P_EM_min und einer maximalen Leistungsabgabe P_BB_min. In einem Modul "EM-Grenzmomentenvorausberechnung" wird aus der maximalen und der minimalen DC-Leistung des Systems unter Berücksichtigung von Verlusten sowie einer aktuellen Drehzahl der Elektromaschine das betragsmäßig größte Generator- und Motormoment M_EM_max, M_EM_min ermittelt. In einem Modul "Antriebsteuerung" werden unter Berücksichtigung der maximalen Generatormoments M_EM_max, des maximalen Motormoments M_EM_min sowie der maximalen und minimalen DC-Leistung P_DC_max, P_DC_min je nach Betriebsmodus der Elektromaschine Soll-Momenten M_EM_soll, Soll-DC-Leistungen P_EM_soll oder Soll-Drehzahlen n_EM_soll ermittelt und einer Steuerung der Elektromaschine zugeführt.

Die Sollgrößenermittlung in der Antriebsteuerung ist abhängig von einem Fahrerwunsch, wobei eine Erzielung des Fahrerwunschs im Regelfall durch unterschiedliche Strategien möglich ist. Die Strategien unterscheiden sich unter anderem in der Funktionssteuerung der Elektromaschine. Erfindungsgemäß erfolgt eine Funktionsfreigabe mindestens in Abhängigkeit des Ladezustands der Batterie gemäß der Darstellung in Fig. 2.

Denkbare Funktionsarten der Elektromaschine lassen sich in zwei Gruppen aufteilen: Funktionen im Generatorbetrieb, d.h. unter einer Leistungsaufnahme durch das E-System und Funktionen im Motorbetrieb, d.h. unter einer Leistungsabgabe durch das E-System. Die Funktionen im Generatorbetrieb sind ein Generieren G, wobei durch die Elektromaschine durch den Verbrennungsmotor angetrieben wird, eine Synchronisation von Hochschaltvorgängen SH und eine Rekuperation R, wobei die Elektromaschine durch Bremsenergie und/oder kinetische Energie angetrieben wird. Die Funktionen im Motorbetrieb sind ein Anlassen A des Verbrennungsmotors, ein kurzzeitiges Boosten kB zum Ausgleich dynamischer Drehmomentdefizite des Verbrennungsmotors, ein dauerhaftes Boosten dB, eine Synchronisation von Rückschaltvorgängen SR und ein elektrisches Fahren E. Die Funktionen werden gestaffelt freigegeben. Daneben ist ein Hysteresebereich Hy vorgesehen. Durch eine geeignete Wahl der Reihenfolge der Staffelung, gezielte Überlappungsbereiche sowie Leistungsbegrenzungen von Funktionen ist der Kraftstoffverbrauch verringerbar ohne dass dadurch Einschränkungen im Fahrkomfort entstehen.

Durch die Funktion Generieren G wird auf bekannte Weise notwendige elektrische Energie zur Gewährleistung von Basisfunktionen des Fahrzeugs erzeugt. Die Funktion wird erst bei Unterschreiten eines kritischen Ladezustand-Schwellwertes freigegeben, um so ein weiteres Absinken zu verhindern. Die Freigabe erfolgt zunächst nur mit einer geringen Leistungsabgabe im Sinne eines guten Ladewirkungsgrades bei geringen ohmschen Verlusten. Erst bei einem weiteren Absinken des Ladezustandes wird die Funktion Generieren G innerhalb stabil zu beherrschender Leistungsgrenzen freigegeben.

In den Funktionen Rekuperation R und Synchronisation von Hochschaltvorgängen SH wird Bremsenergie und/oder kinematische Energie für das E-System genutzt, welche andernfalls beispielsweise als Wärmeverlust an die Umgebung abgegeben würde. Die Funktionen verlangen keine oder zumindest keine nennenswerte Energiezufuhr durch einen der in Fig. 1 dargestellten Speicher 21, 23, 25. Im Rahmen der maximal zulässigen Leistungsaufnahme P_BB_max von Batterie und Bordnetz und/oder der maximal zulässigen Generatorleistung P_EM_max wird die Funktion daher über den gesamten Ladezustandbereich der Batterie ohne Leistungsbegrenzung freigegeben. Eine Steuerung der Rekuperation R erfolgt vorzugsweise über den Bremspedalweg und/oder den Bremsdruck. Die Synchronisation von Hochschaltvorgängen SH wird über die zuständigen Regler beispielsweise einer Getriebesteuerung geregelt.

Motorische Basisfunktion ist das Anlassen A des Verbrennungsmotors. Die Funktion Anlassen A ist in jedem Ladezustand SOC der Batterie im Rahmen der zulässigen Entladeleistung des E-Systems P_BB_min und/oder der Motorleistung P_EM_min freigegeben.

Die Funktionen kurzzeitiges Boosten kB und Synchronisation der Rückschaltvorgänge SR sind Komfort-Funktionen. Sie sind daher bei Unterschreiten eines kritischen Ladezustand-Schwellwertes nicht länger zugelassen, um einen ausreichenden Ladezustand für ein Starten des Verbrennungsmotors sicherzustellen. Die maximal erlaubte Leistungsabgabe für diese Funktionen nimmt vorzugsweise mit dem Ladezustand ab.

Die Funktion elektrisch Fahren E wird bei Überschreiten eines kritischen Ladezustandes mit einer begrenzten Leistungsfähigkeit freigegeben. Die erlaubte Leistungsabgabe ist so bemessen, das ein Kraftstoffverbrauch minimiert wird. Hierfür wird bis zu der Leistung elektrisch gefahren, bei der ein spezifischer Verbrauch des Verbrennungsmotors schlechter ist, als ein spezifischer Verbrauch einer motorischen Leistungsabgabe der Elektromaschine auf Basis der Energie, die während der Funktion Generieren G erzeugt wurde. Steigt, beispielsweise in Folge einer starken Rekuperation der Ladezustand der Batterie über einen weiteren Schwellwert, so wird die Funktion im Rahmen der technischen Leistungsgrenzen des E-Systems freigegeben. Es ist anzumerken, dass für eine Verbrauchsoptimierung ab diesem Schwellwert des Ladezustandes die Funktion Generieren G vorzugsweise nicht länger freigegeben ist. Ein weiterer Anstieg des Ladezustands der Batterie ist dann nur in Folge von Rekuperation möglich.

Da ein Wechsel zwischen verbrennungsmotorischem und elektrischem Fahren im Regelfall für den Fahrer erkennbar ist, bedeutet der Wechsel eine Komforteinbuße. Aus Komfortgründen sind daher Hysteresen Hy eingeführt, um so eine Häufigkeit der Wechsel herabzusetzen und Startemissionen des Verbrennungsmotors zu vermeiden.

In Ausnahmefällen ist ein weiterer Anstieg des Ladezustands beispielsweise in Folge ungewöhnlicher Rekuperationsphasen denkbar. Wird ein weiterer Schwellwert überschritten, so wird die Funktion dauerhaftes Boosten dB freigegeben. Die Funktion dauerhaft Boosten dB ist weniger verbrauchsoptimal als die Funktion elektrisch Fahren E. Durch die Funktion dauerhaft Boosten dB ist es jedoch sichergestellt, dass in einem oberen Ladezustandsbereich zusätzliche Energie möglichst schnell wieder abgegeben wird, ohne dass die Funktion Rekuperation R abzusteuern ist. Die Funktion dauerhaftes Boosten dB kann entweder für eine temporäre Leistungssteigerung genutzt werden, wobei der Verbrennungsmotor mit unveränderter Leistung weiter betrieben wird, oder für eine Minimierung des Kraftstoffverbrauchs, wobei die Leistung des Verbrennungsmotors reduziert wird.

Es ist denkbar, ein Abschalten des Verbrennungsmotors durch Voreinstellungen gänzlich zu verbieten, um so die zusätzliche Energie für eine Leistungssteigerung zu nutzen. Daneben ist es auch denkbar, ein elektrisches Fahren auch bei Leistungseinbußen zuzulassen, wenn beispielsweise Emissionsbeschränkungen vorliegen.

Die motorischen Funktionen werden innerhalb ihrer Grenzen vorzugsweise mittels eines Gaspedalwertes und/oder davon direkt abhängiger Größen, z.B. Radleistungswunsch, Pedalgeschwindigkeit etc., angesteuert.

Die Schwellwerte werden vorzugsweise an Umweltinformationen angepasst. Fig. 3 zeigt eine Funktionsgrenzenadaption am Beispiel des dauerhaften Boostens dB. Die Bezeichnungen entsprechen dabei Fig. 2. Mittels einer Topografiefrüherkennung ist eine bevorstehende, lang andauernde Rekuperationsphase erkennbar und einem Energiemanagement signalisierbar. Aufgrund der Signalisierung werden im Vorfeld Maßnahmen ergriffen, um einen Verbrauch gespeicherter Energie zu fördern, so dass ausreichend Speicherplatz für die durch Rekuperation erzeugte Energie zur Verfügung gestellt wird. Hierfür wird beispielsweise eine Funktionsgrenze für dauerhaftes Boosten FdB in Richtung kleinerer Ladezustände FdB' verschoben. Daneben ist es denkbar, dass Stadtfahrten und/oder Stauphasen durch geeignete Sensorik und/oder Methoden erkannt werden. In diesen Phasen ist eine Energiegewinnung durch Rekuperation nicht zu erwarten. Um innerhalb dieser Phasen verbrauchs- und/oder komfortrelevante Funktionen nicht absteuern und/oder den Verbrennungsmotor starten zu müssen, wird zum Beispiel die Funktionsgrenze für dauerhaftes Boosten FdB in Richtung größerer Ladezustände FdB" verschoben.

Für eine Anpassung an Umweltinformationen ist es denkbar, Kenngrößen im Vorfeld zu erstellen und die Funktionsgrenzen in Abhängigkeit der Kenngrößen einheitlich zu verschieben und/oder eine Steigung der Funktionsgrenzen anzupassen. Daneben ist es denkbar, einzelne Funktionsbereiche aufgrund von Umweltinformationen und/oder Kenngrößen zu strecken oder zu stauchen und/oder einzeln zu verschieben.

## Patentansprüche

1. Vorrichtung für ein Energiemanagement in einem Kraftfahrzeug, umfassend einen Verbrennungsmotor (31) und mindestens eine Elektromaschine, (33) wobei die Elektromaschine (33) wahlweise generatorisch oder motorisch betreibbar ist und ein Generatorbetrieb der Elektromaschine (33) durch den Verbrennungsmotor (31) bei Unterschreiten eines Ladezustand-Schwellwertes freigebbar ist, wobei eine Leistungsabgabe der Elektromaschine (33) mindestens in Abhängigkeit des Ladezustands der Batterie (23, 25) begrenzbar ist, wobei im motorischen Betrieb mindestens eine Anlasserfunktion (A) zum Starten des Verbrennungsmotors (31) freigegeben ist und in einer Funktion "elektrisch Fahren" (E) der Verbrennungsmotor (31) abschaltbar und das Kraftfahrzeug durch die Elektromaschine (33) antreibbar ist, wobei die Funktion "elektrisch Fahren" (E) mindestens in Abhängigkeit des Ladezustands der Batterie (23, 25) mit einer variablen Leistungsbegrenzung freigebbar ist, wobei die Elektromaschine (33) zusätzlich in einer Funktion "dauerhaft Boosten" (dB) betreibbar ist, in der die Elektromaschine (33) zusätzlich zu einem Antrieb durch den Verbrennungsmotor (31) betrieben wird, wobei die Funktion "dauerhaft Boosten" (dB) mindestens in Abhängigkeit des Ladezustandes der Batterie (23, 25) freigebbar ist,
**dadurch gekennzeichnet, dass**
die Leistungsabgabe der Funktion "dauerhaft Boosten" (dB) mindestens in Abhängigkeit des Ladezustandes begrenzbar ist, wobei mindestens ein Grenzwert für ein Zu- oder Absteuern mindestens der Funktion "dauerhaft Boosten" (dB) der Elektromaschine (33) dynamisch festlegbar ist, wobei für eine Festlegung mindestens eine Umweltinformation berücksichtigt wird, wobei die mindestens eine Umweltinformation eine Topografieerkennung ist, in deren Abhängigkeit Grenzwerte in Richtung höherer oder niedrigerer Ladezustände verschoben werden.

2. Vorrichtung nach Anspruch 1, **dadurch gekennzeichnet, dass** die Elektromaschine (33) zusätzlich durch ein Fahrzeuggetriebe (35) als Generator betreibbar ist, wobei ein Betrieb der Elektromaschine (33) durch das Fahrzeuggetriebe (35) über den gesamten Ladezustandsbereich der Batterie (23, 25) freigegeben ist.

3. Vorrichtung nach Anspruch 1 oder 2, **dadurch gekennzeichnet, dass** die Elektromaschine (33) in Funktionen "kurzzeitig Boosten" (kB) und/oder "Synchronisation Rückschaltvorgänge" (SR) betreibbar ist, wobei die Funktionen (kB, SR) mindestens in Abhängigkeit des Ladezustands der Batterie (23, 25) freigebbar sind und die Leistungsabgabe mindestens in Abhängigkeit des Ladezustands begrenzbar ist.

4. Vorrichtung nach einem der vorangegangenen Ansprüche, **dadurch gekennzeichnet, dass** ein Wechsel zwischen einem elektrischen und einem verbrennungsmotorischen Betrieb des Kraftfahrzeugs durch Hysteresen (Hy) begrenzt ist.

5. Vorrichtung nach einem der genannten Ansprüche, **dadurch gekennzeichnet, dass** mindestens ein Grenzwert für ein Zu- oder Absteuern mindestens einer weiteren Funktion (G, R; SH; A, kB, SR, E) der Elektromaschine (33) und/oder des Verbrennungsmotors (31) dynamisch festlegbar ist, wobei für eine Festlegung mindestens eine Umweltinformation berücksichtigt wird.

6. Vorrichtung nach einem der vorangegangenen Ansprüche, **dadurch gekennzeichnet, dass** eine Anpassung des Grenzwertes stufenlos erfolgt.

7. Vorrichtung nach einem der genannten Ansprüche, **dadurch gekennzeichnet, dass** eine maximale Leistungsfähigkeit eines E-Systems, umfassend die Elektromaschine (33), mindestens eine Batterie (23, 25) und mindestens ein Bordnetz, mindestens aus der maximal zulässigen Lade- und Entladeleistung der Batterie (23, 25) ermittelbar ist.

8. Vorrichtung nach Anspruch 7, **dadurch gekennzeichnet, dass** ein maximales Motor- und/oder Generatormoment in Abhängigkeit einer Leistungsfähigkeit des E-Systems sowie einer aktuellen Drehzahl der Elektromaschine (32) und/oder Verlusten ermittelbar ist.

9. Vorrichtung nach Anspruch 7 oder 8, **dadurch gekennzeichnet, dass** für die Leistungsfähigkeit des E-Systems mindestens eine Bordnetzleistung berücksichtigbar ist, wobei die Bordnetzleistung aus einer Leistungsaufnahme mindestens eines elektrischen Verbrauchers (43, 45) ermittelbar ist.

10. Vorrichtung nach einem der Ansprüche 7 bis 9, **dadurch gekennzeichnet, dass** für die Leistungsfähigkeit des E-Systems mindestens eine maximal zulässige Leistungsaufnahme und -abgabe der Elektromaschine (33) berücksichtigbar ist.

11. Verfahren für ein Energiemanagement in einem Kraftfahrzeug, umfassend einen Verbrennungsmotor (31) und mindestens eine Elektromaschine, (33) wobei die Elektromaschine (33) wahlweise generatorisch oder motorisch betreibbar ist und ein Generatorbetrieb der Elektromaschine (33) durch den Verbrennungsmotor (31) bei Unterschreiten eines Ladezustand-Schwellwertes freigegeben wird, wobei eine Leistungsabgabe der Elektromaschine (33) mindestens in Abhängigkeit des Ladezustands der Batterie (23, 25) begrenzbar ist, wobei im motorischen Betrieb mindestens eine Anlasserfunktion (A) zum Starten des Verbrennungsmotors (31) freigegeben ist und in einer Funktion "elektrisch Fahren" (E) der Verbrennungsmotor (31) abschaltbar und das Kraftfahrzeug durch die Elektromaschine (33) antreibbar ist, wobei die Funktion "elektrisch Fahren" (E) mindestens in Abhängigkeit des Ladezustands der Batterie (23, 25) mit einer variablen Leistungsbegrenzung freigegeben wird, wobei die Elektromaschine (33) zusätzlich in einer Funktion "dauerhaft Boosten" (dB) betreibbar ist, in der die Elektromaschine (33) zusätzlich zu einem Antrieb durch den Verbrennungsmotor (31) betrieben wird, wobei die Funktion "dauerhaft Boosten" (dB) mindestens in Abhängigkeit des Ladezustandes der Batterie (23, 25) freigebbar ist,
**dadurch gekennzeichnet, dass**
die Leistungsabgabe der Funktion "dauerhaft Boosten" (dB) mindestens in Abhängigkeit des Ladezustandes begrenzbar ist, wobei mindestens ein Grenzwert für ein Zu- oder Absteuern mindestens der Funktion "dauerhaft Boosten" (dB) der Elektromaschine (33) dynamisch festlegbar ist, wobei für eine Festlegung mindestens eine Umweltinformation berücksichtigt wird, wobei die mindestens eine Umweltinformation eine Topografieerkennung ist, in deren Abhängigkeit Grenzwerte in Richtung höherer oder niedrigerer Ladezustände verschoben werden.

12. Verfahren nach Anspruch 11, **dadurch gekennzeichnet, dass** die Elektromaschine (33) zusätzlich durch ein Fahrzeuggetriebe (35) als Generator betreibbar ist, wobei ein Betrieb der Elektromaschine (33) durch das Fahrzeuggetriebe (35) über den gesamten Ladezustandsbereich der Batterie (23, 25) freigegeben wird.

13. Verfahren nach Anspruch 11 oder 12, **dadurch gekennzeichnet, dass** die Elektromaschine in Funktionen "kurzzeitig Boosten" (kB) und/oder "Synchronisation Rückschaltvorgänge" (SR) betreibbar ist, wobei die Funktionen (kB, SR) mindestens in Abhängigkeit des Ladezustands der Batterie (23, 25) freigegeben werden und die Leistungsabgabe mindestens in Abhängigkeit des Ladezustands begrenzt wird.

14. Verfahren nach einem der Ansprüche 11 bis 13, **dadurch gekennzeichnet, dass** ein Wechsel zwischen einem elektrischen und einem verbrennungsmotorischen Betrieb des Fahrzeugs durch Hysteresen (Hy) begrenzt wird.

15. Verfahren nach einem der Ansprüche 11 bis 14, **dadurch gekennzeichnet, dass** mindestens ein Grenzwert für ein Zu- oder Absteuern mindestens einer weiteren Funktion (G, R; SH; A, kB, SR, E) der Elektromaschine (33) und/oder des Verbrennungsmotors (31) dynamisch festgelegt wird, wobei für eine Festlegung mindestens eine Umweltinformation berücksichtigt wird.

16. Verfahren nach einem der Ansprüche 11 bis 15, **dadurch gekennzeichnet, dass** eine Anpassung stufenlos erfolgt.

17. Verfahren nach einem der Ansprüche 11 bis 16, **dadurch gekennzeichnet, dass** eine maximale Leistungsfähigkeit eines E-Systems, umfassend die Elektromaschine (33), mindestens eine Batterie (23, 25) und mindestens ein Bordnetz, mindestens aus der maximal zulässigen Lade- und Entladeleistung der Batterie (23, 25) ermittelt wird.

18. Verfahren nach Anspruch 17, **dadurch gekennzeichnet, dass** ein maximales Motor- und/oder Generatormoment in Abhängigkeit einer Leistungsfähigkeit des E-Systems sowie einer aktuellen Drehzahl der Elektromaschine (33) und/oder Verlusten ermittelt wird.

19. Verfahren nach Anspruch 17 oder 18, **dadurch gekennzeichnet, dass** für die Leistungsfähigkeit des E-Systems mindestens eine Bordnetzleistung berücksichtigt wird, wobei die Bordnetzleistung aus einer Leistungsaufnahme mindestens eines elektrischen Verbrauchers (43, 45) ermittelt wird.

20. Verfahren nach einem der Ansprüche 17 bis 19, **dadurch gekennzeichnet, dass** für die Leistungsfähigkeit des E-Systems mindestens eine maximal zulässige Leistungsaufnahme und -abgabe der Elektromaschine (33) berücksichtigt wird.

## Claims

1. Device for energy management in a motor vehicle, comprising an internal combustion engine (31) and at least one electric machine (33), wherein the electric machine (33) can optionally be operated as a generator or as a motor, and a generator mode of the electric machine (33) can be enabled by means of the internal combustion engine (31) when a threshold value for a state of charge is undershot, wherein
a power output of the electric machine (33) can be limited at least as a function of the state of charge of the battery (23, 25), wherein in the motor mode at least one starter function (A) for starting the internal combustion engine (31) is enabled, and in an "electric driving" (E) function the internal combustion engine (31) can be switched off and the motor vehicle can be powered by the electric machine (33), wherein the "electric driving" (E) function can be enabled at least as a function of the state of charge of the battery (23, 25) with a variable power limitation, wherein the electric machine (33) can additionally be operated in a "continuous boosting" function (dB) in which the electric machine (33) is operated, in addition to a drive, by the internal combustion engine (31), wherein the "continuous boosting" function (dB) can be enabled at least as a function of the state of charge of the battery (23, 25),
**characterized in that**
the power output of the "continuous boosting" function (dB) can be limited at least as a function of the state of charge, wherein at least one limiting value for activation or deactivation of at least the "continuous boosting" function (dB) of the electric machine (33) can be defined dynamically, wherein at least one environmental information item is taken into account for a definition, wherein the at least one environmental information item is a topography detection process, as a function of which limiting values are shifted in the direction of relatively high or relatively low states of charge.

2. Device according to Claim 1, **characterized in that** the electric machine (33) can be additionally operated as a generator by means of a vehicle transmission (35), wherein operation of the electric machine (33) by the vehicle transmission (35) is enabled over the entire state of charge range of the battery (23, 25).

3. Device according to Claim 1 or 2, **characterized in that** the electric machine (33) can be operated in "brief boosting" (kB) and/or "synchronization shift-down processes" (SR) functions, wherein the functions (kB, SR) can be enabled at least as a function of the state of charge of the battery (23, 25), and power output can be limited at least as a function of the state of charge.

4. Device according to one of the preceding claims, **characterized in that** a change between an electrical operating mode and an internal-combustion-engine operating mode of the motor vehicle is limited by hysteresis (Hy).

5. Device according to one of the specified claims, **characterized in that** at least one limiting value for activating or deactivating at least one further function (G, R; SH; A, kB, SR, E) of the electric machine (33) and/or of the internal combustion engine (31) can be defined dynamically, wherein at least one environmental information item is taken into account for a definition.

6. Device according to one of the preceding claims, **characterized in that** the limiting value is adapted in an infinitely variable fashion.

7. Device according to one of the specified claims, **characterized in that** maximum efficiency of an e system, comprising the electric machine (33), at least one battery (23, 25) and at least one on-board power system, can be determined at least from the maximum permissible charge power and discharge power of the battery (23, 25).

8. Device according to Claim 7, **characterized in that** a maximum motor torque and/or generator torque can be determined as a function of an efficiency level of the e system as well as a current rotational speed of the electric machine (32) and/or losses.

9. Device according to Claim 7 or 8, **characterized in that** at least one on-board power system power level can be taken into account for the efficiency level of the e system, wherein the on-board power system power level can be determined from a power consumption of at least one electrical consumer (43, 45).

10. Device according to one of Claims 7 to 9, **characterized in that** at least one maximum permissible power consumption and power output of the electric machine (33) can be taken into account for the efficiency level of the e system.

11. Method for energy management in a motor vehicle, comprising an internal combustion engine (31) and at least one electric machine (33), wherein the electric machine (33) can optionally be operated as a generator or as a motor, and a generator mode of the electric machine (33) is enabled by means of the internal combustion engine (31) when a threshold value for a state of charge is undershot, wherein
a power output of the electric machine (33) can be limited at least as a function of the state of charge of the battery (23, 25), wherein in the motor mode at least one starter function (A) for starting the internal combustion engine (31) is enabled, and in an "electric driving" (E) function the internal combustion engine (31) can be switched off and the motor vehicle can be powered by the electric machine (33), wherein the "electric driving" (E) function is enabled at least as a function of the state of charge of the battery (23, 25) with a variable power limitation, wherein the electric machine (33) can additionally be operated in a "continuous boosting" function (dB) in which the electric machine (33) is operated, in addition to a drive, by the internal combustion engine (31), wherein the "continuous boosting" function (dB) can be enabled at least as a function of the state of charge of the battery (23, 25),
**characterized in that**
the power output of the "continuous boosting" function (dB) can be limited at least as a function of the state of charge, wherein at least one limiting value for activation or deactivation of at least the "continuous boosting" function (dB) of the electric machine (33) can be defined dynamically, wherein at least one environmental information item is taken into account for a definition, wherein the at least one environmental information item is a topography detection process, as a function of which limiting values are shifted in the direction of relatively high or relatively low states of charge.

12. Method according to Claim 11, **characterized in that** the electric machine (33) can be additionally operated as a generator by means of a vehicle transmission (35), wherein operation of the electric machine (33) by the vehicle transmission (35) is enabled over the entire state of charge range of the battery (23, 25).

13. Method according to Claim 11 or 12, **characterized in that** the electric machine can be operated in "brief boosting" (kB) and/or "synchronization shift-down processes" (SR) functions, wherein the functions (kB, SR) are enabled at least as a function of the state of charge of the battery (23, 25), and power output is limited at least as a function of the state of charge.

14. Method according to one of Claims 11 to 13, **characterized in that** a change between an electrical operating mode and an internal-combustion-engine operating mode of the motor vehicle is limited by hysteresis (Hy).

15. Method according to one of Claims 11 to 14, **characterized in that** at least one limiting value for activating or deactivating at least one further function (G, R; SH; A, kB, SR, E) of the electric machine (33) and/or of the internal combustion engine (31) is defined dynamically, wherein at least one environmental information item is taken into account for a definition.

16. Method according to one of Claims 11 to 15, **characterized in that** adaptation takes place in an infinitely variable fashion.

17. Method according to one of Claims 11 to 16, **characterized in that** a maximum efficiency level of an e system, comprising the electric machine (33), at least one battery (23, 25) and at least one on-board power system, is determined at least from the maximum permissible charging power and discharging power of the battery (23, 25).

18. Method according to Claim 17, **characterized in that** a maximum motor torque and/or generator torque is determined as a function of the efficiency of the e system as well as a current rotational speed of the electric machine (33) and/or losses.

19. Method according to Claim 17 or 18, **characterized in that** at least one on-board power system power level is taken into account for the efficiency level of the e system, wherein the on-board power system power level is determined from a power consumption of at least one electrical consumer (43, 45).

20. Method according to one of Claims 17 to 19, **characterized in that** at least one maximum permissible power consumption and power output of the electric machine (33) is taken into account for the efficiency level of the e system.

## Revendications

1. Dispositif de gestion d'énergie dans un véhicule automobile, comprenant un moteur à combustion interne (31) et au moins une machine électrique (33), la machine électrique (33) pouvant fonctionner, au choix, en tant que générateur ou en tant que moteur et un régime de générateur de la machine électrique (33) pouvant être libéré par le moteur à combustion interne (31) en cas de franchissement vers le bas d'une valeur de seuil d'état de charge,
une puissance délivrée par la machine électrique (33) pouvant être limitée au moins en fonction de l'état de charge de la batterie (23, 25), au moins une fonction de démarreur (A) destinée à faire démarrer le moteur à combustion interne (31) étant libérée en régime de moteur et, dans une fonction « conduite électrique » (E), le moteur à combustion interne (31) pouvant être arrêté et le véhicule automobile entraîné par la machine électrique (33), la fonction « conduite électrique » (E) pouvant être libérée au moins en fonction de l'état de charge de la batterie (23, 25) avec une limitation de puissance variable, la machine électrique (33) pouvant en outre fonctionner dans une fonction « renfort permanent » (dB), dans laquelle la machine électrique (33) fonctionne en plus d'un entraînement par le moteur à combustion interne (31), la fonction « renfort permanent » (dB) pouvant être libérée au moins en fonction de l'état de charge de la batterie (23, 25)
**caractérisé en ce que**
la puissance délivrée de la fonction « renfort permanent » (dB) peut être limitée au moins en fonction de l'état de charge, au moins une valeur limite pour une commande de mise en service ou hors service d'au moins la fonction « renfort permanent » (dB) de la machine électrique (33) pouvant être définie dynamiquement, au moins une information d'environnement étant prise en compte pour la définition, l'au moins une information d'environnement étant une reconnaissance de topographie en fonction de laquelle les valeurs limites sont décalées en direction d'états de charge plus élevés ou plus faibles.

2. Dispositif selon la revendication 1, **caractérisé en ce que** la machine électrique (33) peut en outre fonctionner en tant que générateur par le biais d'une boîte de vitesses de véhicule (35), une opération de la machine électrique (33) par le biais de la boîte de vitesses de véhicule (35) étant libérée sur la totalité de la plage d'états de charge de la batterie (23, 25).

3. Dispositif selon la revendication 1 ou 2, **caractérisé en ce que** la machine électrique (33) peut fonctionner dans les fonctions « renfort de courte durée » (kB) et/ou « synchronisation des opérations de rétrogradage » (SR), les fonctions (kB, SR) pouvant être libérées au moins en fonction de l'état de charge de la batterie (23, 25) et la puissance délivrée pouvant être limitée au moins en fonction de l'état de charge.

4. Dispositif selon l'une des revendications précédentes, **caractérisé en ce qu'**un changement entre un fonctionnement électrique et un fonctionnement à moteur à combustion interne du véhicule automobile est limité par une hystérésis (Hy).

5. Dispositif selon l'une des revendications précédentes, **caractérisé en ce qu'**au moins une valeur limite pour une commande de mise en service ou hors service d'au moins une fonction supplémentaire (G, R ; SH ; A, kB, SR, E) de la machine électrique (33) et/ou du moteur à combustion interne (31) peut être définie dynamiquement, au moins une information d'environnement étant prise en compte pour une définition.

6. Dispositif selon l'une des revendications précédentes, **caractérisé en ce qu'**une adaptation de la valeur limite s'effectue en continu.

7. Dispositif selon l'une des revendications précédentes, **caractérisé en ce qu'**une capacité de puissance maximale d'un système électrique, comprenant la machine électrique (33), au moins une batterie (23, 25) et au moins un réseau de bord, peut être déterminée au moins à partir de la puissance de charge et de décharge maximale admissible de la batterie (23, 25).

8. Dispositif selon la revendication 7, **caractérisé en ce qu'**un couple de moteur et/ou de générateur maximum peut être déterminé en fonction d'une capacité de puissance du système électrique ainsi que d'une vitesse de rotation actuelle de la machine électrique (32) et/ou de pertes.

9. Dispositif selon la revendication 7 ou 8, **caractérisé en ce qu'**au moins une puissance du réseau de bord peut être prise en compte pour la capacité de puissance du système électrique, la puissance du réseau de bord pouvant être déterminée à partir d'une puissance consommée d'au moins un consommateur électrique (43, 45).

10. Dispositif selon l'une des revendications 7 à 9, **caractérisé en ce qu'**au moins une puissance consommée et délivrée maximale admissible de la machine électrique (33) peut être prise en compte pour la capacité de puissance du système électrique.

11. Procédé de gestion d'énergie dans un véhicule automobile, comprenant un moteur à combustion interne (31) et au moins une machine électrique (33), la machine électrique (33) pouvant fonctionner, au choix, en tant que générateur ou en tant que moteur et un régime de générateur de la machine électrique (33) pouvant être libéré par le moteur à combustion interne (31) en cas de franchissement vers le bas d'une valeur de seuil d'état de charge,
une puissance délivrée par la machine électrique (33) pouvant être limitée au moins en fonction de l'état de charge de la batterie (23, 25), au moins une fonction de démarreur (A) destinée à faire démarrer le moteur à combustion interne (31) étant libérée en régime de moteur et, dans une fonction « conduite électrique » (E), le moteur à combustion interne (31) pouvant être arrêté et le véhicule automobile entraîné par la machine électrique (33), la fonction « conduite électrique » (E) pouvant être libérée au moins en fonction de l'état de charge de la batterie (23, 25) avec une limitation de puissance variable, la machine électrique (33) pouvant en outre fonctionner dans une fonction « renfort permanent » (dB), dans laquelle la machine électrique (33) fonctionne en plus d'un entraînement par le moteur à combustion interne (31), la fonction « renfort permanent » (dB) pouvant être libérée au moins en fonction de l'état de charge de la batterie (23, 25),
**caractérisé en ce que**
la puissance délivrée de la fonction « renfort permanent » (dB) peut être limitée au moins en fonction de l'état de charge, au moins une valeur limite pour une commande de mise en service ou hors service d'au moins la fonction « renfort permanent » (dB) de la machine électrique (33) pouvant être définie dynamiquement, au moins une information d'environnement étant prise en compte pour la définition, l'au moins une information d'environnement étant une reconnaissance de topographie en fonction de laquelle les valeurs limites sont décalées en direction d'états de charge plus élevés ou plus faibles.

12. Procédé selon la revendication 11, **caractérisé en ce que** la machine électrique (33) peut en outre fonctionner en tant que générateur par le biais d'une boîte de vitesses de véhicule (35), une opération de la machine électrique (33) par le biais de la boîte de vitesses de véhicule (35) étant libérée sur la totalité de la plage d'états de charge de la batterie (23, 25).

13. Procédé selon la revendication 11 ou 12, **caractérisé en ce que** la machine électrique peut fonctionner dans les fonctions « renfort de courte durée » (kB) et/ou « synchronisation des opérations de rétrogradage » (SR), les fonctions (kB, SR) étant libérées au moins en fonction de l'état de charge de la batterie (23, 25) et la puissance délivrée étant limitée au moins en fonction de l'état de charge.

14. Procédé selon l'une des revendications 11 à 13, **caractérisé en ce qu'**un changement entre un fonctionnement électrique et un fonctionnement à moteur à combustion interne du véhicule automobile est limité par une hystérésis (Hy).

15. Procédé selon l'une des revendications 11 à 14, **caractérisé en ce qu'**au moins une valeur limite pour une commande de mise en service ou hors service d'au moins une fonction supplémentaire (G, R ; SH ; A, kB, SR, E) de la machine électrique (33) et/ou du moteur à combustion interne (31) est définie dynamiquement, au moins une information d'environnement étant prise en compte pour une définition.

16. Procédé selon l'une des revendications 11 à 15, **caractérisé en ce qu'**une adaptation s'effectue en continu.

17. Procédé selon l'une des revendications 11 à 16, **caractérisé en ce qu'**une capacité de puissance maximale d'un système électrique, comprenant la machine électrique (33), au moins une batterie (23, 25) et au moins un réseau de bord, est déterminée au moins à partir de la puissance de charge et de décharge maximale admissible de la batterie (23, 25).

18. Procédé selon la revendication 17, **caractérisé en ce qu'**un couple de moteur et/ou de générateur maximum est déterminé en fonction d'une capacité de puissance du système électrique ainsi que d'une vitesse de rotation actuelle de la machine électrique (33) et/ou de pertes.

19. Procédé selon la revendication 17 ou 18, **caractérisé en ce qu'**au moins une puissance du réseau de bord est prise en compte pour la capacité de puissance du système électrique, la puissance du réseau de bord étant déterminée à partir d'une puissance consommée d'au moins un consommateur électrique (43, 45).

20. Procédé selon l'une des revendications 17 à 19, **caractérisé en ce qu'**au moins une puissance consommée et délivrée maximale admissible de la machine électrique (33) est prise en compte pour la capacité de puissance du système électrique.
